# EUROPÄISCHE PATENTSCHRIFT

(11) **EP 1 497 359 B1**
(45) Veröffentlichungstag und Bekanntmachung des Hinweises auf die Patenterteilung: **16.04.2008**
(21) Anmeldenummer: 03706255.1
(22) Anmeldetag: 29.01.2003
(51) Int. Cl.: C08J 7/04, B60S 1/38

(54) **VERFAHREN ZUR HERSTELLUNG EINES GUMMIARTIKELS UND GUMMIARTIKEL**
METHOD FOR THE PRODUCTION OF A RUBBER ARTICLE AND CORRESPONDING RUBBER ARTICLE
PROCEDE DE PRODUCTION D'UN ARTICLE EN CAOUTCHOUC, ET ARTICLE EN CAOUTCHOUC CORRESPONDANT

(30) Priorität: 22.03.2002 DE 10212682
(43) Veröffentlichungstag der Anmeldung: 19.01.2005
(73) Patentinhaber: ROBERT BOSCH GMBH, 70442 Stuttgart (DE)
(72) Erfinder: DIERKES, Wilma, 48599 Gronau (DE); WILMS, Christian, B-3582 Beringen (BE); GRUHN, Herbert, 71638 Ludwigsburg (DE); BAUN, Rainer, 72574 Bad Urach (DE); SCHMID, Hellmut, 74343 Sachsenheim (DE); LEUTSCH, Wolfgang, 77830 Buehlertal (DE)
(86) Internationale Anmeldenummer: PCT/DE2003/000235
(87) Internationale Veröffentlichungsnummer: WO 2003/080717

(56) Entgegenhaltungen:
- DE-A- 19 612 231
- US-A- 5 883 168
- PATENT ABSTRACTS OF JAPAN vol. 1998, no. 03, 27. Februar 1998 (1998-02-27) & JP 09 296136 A (SOFT KYUKYU CORP:KK;AKUROSU KK), 18. November 1997 (1997-11-18)

## Beschreibung

### Stand der Technik

Die Erfindung geht von einem Verfahren zur Herstellung eines Gummiartikels gemäß der im Oberbegriff des Patentanspruches 1 näher definierten Art sowie von einem Gummiartikel gemäß der im Oberbegriff des Patentanspruches 6 näher definierten Art aus.

Ein derartiger Gummiartikel ist aus der DE 196 12 231 A1 bekannt und als Wischblatt für einen Scheibenwischer ausgebildet. Das Wischblatt umfaßt einen Wischgummi, der auf der Basis von Naturkautschuk hergestellt sein kann. Der Wischgummi ist mit einem Gleitlack beschichtet, der aus einem lufthärtenden Zwei-Komponenten-Trockenschmierstoff hergestellt ist. Eine der Komponenten ist ein Festschmierstoff, insbesondere Polytetrafluorethylen (PTFE), und die andere Komponente ist ein Härter, der im wesentlichen aus Polyisocyanat besteht. Dieser Gleitlack hat bei einer Umgebungstemperatur von 100°C eine Aushärtzeit von etwa 5 Minuten und bei einer Umgebungstemperatur von 20°C eine Aushärtzeit von etwa 24 Stunden.

Mit derart langen Aushärtzeiten ist dieser bekannte Wischgummi jedoch nachteiligerweise für eine Inline-Fertigung, welche für solche Massenartikel die Regel ist, nicht akzeptabel.

Aus der JP 3 042 355 ist ein Wischblatt eines Scheibenwischers bekannt, das einen Wischgummi mit einer gleitmittelhaltigen Beschichtung aufweist. Bei der Herstellung des Wischgummis wird ein Teil der Beschichtung im Bereich einer Wischlippe des Wischgummis mittels eines geeigneten Werkzeuges abgeschabt.

Ferner ist es bekannt, den Reibwert eines Wischgummis eines Scheibenwischers dadurch herabzusetzen, daß er nach dem Extrudieren einer Chlorierung und anschließend einer Graphitierung ausgesetzt wird.

Bei der Chlorierung wird Chlor freigesetzt, was eine Beeinträchtigung des betreffenden Arbeitsumfeldes bei der Produktion darstellt. Zudem hat es sich gezeigt, daß sich bei einem Wischgummi, der graphitiert wurde, in der Regel allmählich die Oberflächenbeschichtung ablöst, was zu Verschmutzungen im Umfeld des Wischgummis führt sowie die Wischeigenschaften verschlechtert. Des weiteren kann das Chlorieren nicht zur Inline-Fertigung eines Wischgummis eingesetzt werden.

### Vorteile der Erfindung

Das erfindungsgemäße Verfahren zur Herstellung eines Gummiartikels mit den Merkmalen nach dem Oberbegriff des Patentanspruches 1, bei welchem die Grundform des Gummiartikels erzeugt, die Grundform mit einem fotochemisch härtenden Gleitlack beschichtet und der fotochemisch härtende Gleitlack dann ausgehärtet wird, hat den Vorteil, daß eine Weiterbearbeitung des Gummiartikels nach dem Auftragen des Gleitlackes schon nach sehr kurzer Zeit möglich ist, denn ein fotochemisch härtender Gleitlack härtet in der Regel innerhalb von Sekunden bzw. Sekundenbruchteilen aus.

Ein fotochemisch aushärtender Lack stellt einen Polymerisationslack dar, der mit Hilfe von Fotoinitiatoren unter Einwirkung von beispielsweise ultraviolettem Licht in kurzer Zeit aushärtet. Die Fotoinitiatoren nehmen Lichtenergie auf und zerfallen in reaktionsfreudige Spaltprodukte, die wiederum eine Kettenreaktion auslösen, und zwar so lange, bis der Lackfilm vollständig ausgehärtet ist.

Bei dem Verfahren nach der Erfindung wird der Gleitlack bevorzugt mittels ultravioletter Strahlung ausgehärtet.

Insbesondere wenn der Gummiartikel ein Wischgummi eines Scheibenwischers ist, kann nach dem erfindungsgemäßen Verfahren ein Wischgummi hergestellt werden, der einen geringen Trockenreibwert µₜᵣ hat.

Bei Einsatz des Verfahrens nach der Erfindung wird die Schichtdicke des Gleitlackes, die zweckmäßig etwa 10 µm beträgt, während der Fertigung des Wischgummis vorzugsweise überwacht. Dies kann, wie in der Praxis üblich, mittels einer fotothermischen Messung erfolgen.

Des weiteren ist ein Wischgummi in der Regel aus einem weichen Gummimaterial gefertigt, wobei die Weichheit der Form ihre Handhabbarkeit in einem automatisierten Fertigungsprozeß erschwert. Es stellt somit einen besonderen Vorteil dar, einen Wischgummi schon kurz nach der Beschichtung und der Aushärtung des Gleitlackes greifen und nachbearbeiten zu können, und zwar ohne die Gleitlackbeschichtung zu beschädigen. Dies war bei bisher vorgeschlagenen Gleitlacken nicht möglich.

Eine Beschichtung eines Wischgummis im Sinne der Erfindung erbringt einen Trockenreibwert µₜᵣ auf Glas kleiner oder gleich 1,2. Dies hat vorteilhafterweise auch eine geringe Geräuschbelastung im Innenraum eines Kraftfahrzeugs zur Folge. Zudem weist ein derartiger Wischgummi eine hohe Abriebbeständigkeit auf, so daß die Funktionalität des Wischgummis während der üblichen Lebensdauer eines Standard-Wischsystems gewährleistet ist.

Das Verfahren nach der Erfindung erlaubt es, bei der Fertigung von Wischgummis deren Extrusion und deren Oberflächenbehandlung miteinander zu verketten und "Inline" durchzuführen.

Ferner reduzieren sich aufgrund der Inline-Fähigkeit des Verfahrens nach der Erfindung und der wenigen Verfahrensschritte, die erforderlich sind, die direkten und indirekten Kosten der Oberflächenbehandlung beispielsweise gegenüber einer Oberflächenbehandlung, bei der der Gummiartikel chloriert und graphitiert wird.

Der Gleitlack wird nach einem dem jeweiligen Anwendungsfall angepaßten üblichen Verfahren auf die Grundform des Gummimaterials aufgebracht. So kann der Gleitlack beispielsweise gespritzt, gegossen oder mittels eines Inkjets oder eines Vakumats auf die Grundform des Gummiartikels aufgebracht werden.

Der fotochemisch härtende Gleitlack umfaßt in der Regel ein Gleitmittel, wie Polytetraflourethylen und/oder Graphit, ein Lösungsmittel, vorzugsweise Wasser, und ein strahlenvernetzbares Bindemittel. Üblicherweise werden zusätzlich verschiedene Additive zur Optimierung der Verarbeitungs- bzw. Schichteigenschaften zugesetzt. Als strahlenvernetzbares Bindemittel wird bevorzugt ein Acrylat verwendet. Es kann sich bei dem strahlenvernetzbaren Bindemittel aber auch um Polyurethanverbindungen bzw. um Mischungen aus Polyurethanverbindungen oder Epoxiden handeln.

Wenn der Gummiartikel einen Wischgummi eines Scheibenwischers darstellt, ist es zweckmäßig, die Wischlippe des Wischgummis nach dem Aushärten des Gleitlackes auf das gewünschte Schneidmaß zu schneiden, so daß eine scharfe Wischkante an der Wischlippe erzeugt wird.

Um vor dem Beschichten des Gummiartikels mit dem Gleitlack eine homogene Oberfläche zu erzeugen, kann es erforderlich sein, die Oberfläche der Grundform vorzubehandeln. Dies kann beispielsweise durch eine Plasmabehandlung oder eine Beflammung erfolgen. Dabei wird auch die Oberfläche des Gummimaterials vorgewärmt, was sich hinsichtlich des Beschichtungsverhaltens des Gummiartikels als positiv erweisen kann.

Um das Lösungsmittel aus dem Gleitlack auszutreiben, kann es erforderlich sein, den Gleitlack vor dem Aushärten zu trocknen. Dies kann durch eine Infrarot-Bestrahlung erfolgen.

Die Erfindung hat auch einen Gummiartikel, insbesondere einen Wischgummi für einen Scheibenwischer, zum Gegenstand. Der Gummiartikel ist mit einer reibungsvermindernden Beschichtung versehen, welche aus einem Gleitlack gebildet ist. Als Gleitlack ist erfindungsgemäß ein fotochemisch härtender Lack vorgesehen.

Ein derartiger Gummiartikel, der beispielsweise auch ein Dichtmaterial darstellen kann, zeichnet sich im Vergleich zu herkömmlichen Gummiartikeln mit einer reibungsvermindernden Beschichtung durch niedrige Herstellungskosten aus.

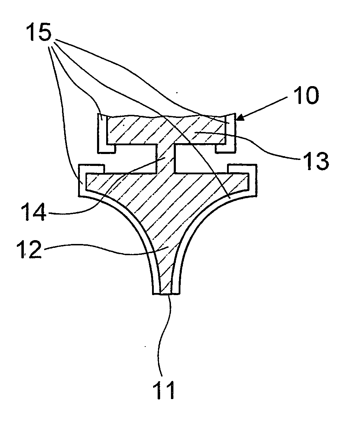

Weitere Vorteile und vorteilhafte Ausgestaltungen des Gegenstandes nach der Erfindung sind der Beschreibung, der Zeichnung und den Patentansprüchen entnehmbar.

### Zeichnung

Ein Ausführungsbeispiel eines Wischblattes nach der Erfindung ist in der Zeichnung schematisch vereinfacht dargestellt und wird in der nachfolgenden Beschreibung näher erläutert. Die einzige Figur zeigt einen Querschnitt durch ein Wischblatt eines Scheibenwischers.

### Beschreibung des Ausführungsbeispiels

In der Zeichnung ist ein Wischblatt 10 dargestellt, das eine eine Wischkante 11 aufweisende Wischlippe 12 aus Gummimaterial, ein hier nur teilweise dargestelltes Kopfteil 13 aus Gummimaterial und einen sogenannten Umlegesteg 14 aus Gummimaterial umfaßt, der zwischen dem Kopfteil 13 und der Wischlippe 12 angeordnet ist.

Die Wischlippe 12, das Kopfteil 13 und der Umlegsteg 14 sind mit einer Oberfläche versehen, die aus einer Gleitlackschicht 15 gebildet ist, die der Anschaulichkeit halber im Vergleich zu der Wischlippe 12, dem Kopfteil 13 und dem Umlegesteg 14 vergrößert dargestellt ist. Die Gleitlackschicht 15 hat vorliegend eine Dicke von etwa 10µm und ist aus einem fotochemisch härtendem Lack hergestellt, der als Gleitmittel Polytetraflourethylen, als Lösungsmittel Wasser und als strahlenvernetzbares Bindemittel ein Acrylat umfaßt.

Im vorliegenden Fall ist die Gleitlackschicht 15 nur in den Bereichen ausgebildet, die in der Regel während des Wischvorganges mit einer Scheibe eines Kraftfahrzeuges in Berührung kommen können. Es ist aber in weiteren Ausführungen des erfindungsgemäßen Verfahrens auch möglich, die Gleitlackschicht 15 vollflächig auszubilden.

Die Herstellung des in der Zeichnung dargestellten Wischblatts 10 erfolgt derart, daß zunächst eine Grundform, die aus dem Kopfteil 13, dem Umlegesteg 14 und der Wischlippe 12 besteht, extrudiert, anschließend in einem Salzbad vulkanisiert und dann einem Waschprozeß unterzogen wird. Im Anschluß daran wird die Grundform mit dem vorstehend beschriebenen Gleitlack nach einem Spritzverfahren beschichtet. Um das Lösungsmittel auszutreiben, wird der Gleitlack dann getrocknet. Im Anschluß daran wird der Gleitlack unter Einwirkung ultravioletten Lichts ausgehärtet.

Gegebenenfalls kann eine Vorbehandlung der Oberfläche des aus der Wischlippe 12, dem Umlegesteg 14 und dem Kopfteil 13 bestehende Gummikörpers notwendig sein, um eine homogene Oberfläche zu erzeugen und die Gummioberfläche vorzuwärmen.

Nach dem Aushärten der Gleitlackschicht 15 wird das Wischblatt 10, insbesondere die Wischlippe 12 auf das gewünschte Schneidmaß geschnitten, so daß die Wischkante 11 hinreichend scharf ist.

## Patentansprüche

1. Verfahren zur Herstellung eines Gummimaterials mit einer reibungsmindernden Beschichtung, die aus einem Gleitlack gebildet ist, **dadurch gekennzeichnet, dass** eine Grundform des Gummiartikels erzeugt, die Grundform mit einem fotochemisch härtenden Gleitlack beschichtet und der fotochemisch härtende Gleitlack dann fotochemisch ausgehärtet wird.

2. Verfahren nach Anspruch 1, **dadurch gekennzeichnet, daß** der Gleitlack unter Einwirkung ultravioletter Strahlung ausgehärtet wird.

3. Verfahren nach Anspruch 1 oder 2, **dadurch gekennzeichnet, daß** der Gummiartikel ein Wischgummi (10) eines Scheibenwischers ist.

4. Verfahren nach einem der Ansprüche 1 bis 3, **dadurch gekennzeichnet, daß** die Grundform des Gummimaterials nach dem Aushärten des Gleitlacks auf das gewünschte Schneidmaß geschnitten wird.

5. Verfahren nach einem der Ansprüche 1 bis 4, **dadurch gekennzeichnet, daß** die Oberfläche des Gummiartikels vor dem Beschichten mit dem Gleitlack zumindest bereichsweise vorbehandelt wird, so daß eine homogene Oberfläche des Gummimaterials erzeugt wird.

6. Verfahren nach einem der Ansprüche 1 bis 5, **dadurch gekennzeichnet, daß** der Gleitlack vor dem Aushärten getrocknet wird.

7. Gummiartikel, insbesondere Wischgummi für einen Scheibenwischer, mit einer zumindest bereichsweise ausgebildeten reibungsmindernden Beschichtung (15), die aus einem Gleitlack gebildet ist, **dadurch gekennzeichnet, dass** der Gleitlack (15) ein fotochemisch ausgehärteter Lack ist.

8. Gummiartikel nach Anspruch 7, **dadurch gekennzeichnet, daß** der fotochemisch härtende Lack (15) ein Gleitmittel, ein Lösungsmittel, das vorzugsweise Wasser ist, und ein strahlenvernetzbares Bindemittel umfaßt.

9. Gummiartikel nach Anspruch 8, **dadurch gekennzeichnet, daß** das strahlenvernetzbare Bindemittel mindestens ein Acrylat umfaßt.

10. Gummiartikel nach Anspruch 8 oder 9, **dadurch gekennzeichnet, daß** das Gleitmittel Polytetraflourethylen (PTFE) und/oder Graphit und oder MoS₂ und/oder Polyamid umfaßt.

## Claims

1. Method for producing a rubber material with a friction reducing coating which is formed by a lubricating varnish, **characterized in that** a basic form of the rubber article is produced, the basic form is coated with a photochemically curing lubricating varnish and the photochemically curing lubricating varnish is then photochemically cured.

2. Method according to Claim 1, **characterized in that** the lubricating varnish is cured by exposure to ultraviolet radiation.

3. Method according to Claim 1 or 2, **characterized in that** the rubber article is a wiping rubber (10) of a windscreen wiper.

4. Method according to one of Claims 1 to 3, **characterized in that** the basic form of the rubber material is cut to the desired dimensions after the curing of the lubricating varnish.

5. Method according to one of Claims 1 to 4, **characterized in that** the surface of the rubber article is pre-treated, at least in certain regions, before the coating with the lubricating varnish, so that a homogeneous surface of the rubber material is produced.

6. Method according to one of Claims 1 to 5, **characterized** and that the lubricating varnish is dried before the curing.

7. Rubber article, in particular wiping rubber for a windscreen wiper, with a friction-reducing coating (15) that is provided at least in certain regions and is formed by a lubricating varnish (15), **characterized in that** the lubricating varnish (15) is a photochemically cured varnish.

8. Rubber article according to Claim 7, **characterized in that** the photochemically curing varnish (15) comprises a lubricant, a solvent, which is preferably water, and a radiation-curable binder.

9. Rubber article according to Claim 8, **characterized in that** the radiation-curable binder comprises at least one acrylate.

10. Rubber article according to Claim 8 or 9, **characterized in that** the lubricant comprises polytetrafluoroethylene (PTFE) and/or graphite and/or MoS₂ and/or polyamide.

## Revendications

1. Procédé de fabrication d'un article en caoutchouc muni d'un revêtement réduisant le frottement, formé d'un vernis de glissement,
**caractérisé en ce qu'**
on réalise une forme de base de l'article en caoutchouc, on revêt la forme de base d'un vernis de glissement, durcissant par effet photochimique et on laisse ensuite durcir le vernis de glissement à durcissement photochimique.

2. Procédé selon la revendication 1,
**caractérisé en ce que**
le vernis de glissement est durci sous l'effet d'un rayonnement ultraviolet.

3. Procédé selon les revendications 1 ou 2,
**caractérisé en ce que**
l'article en caoutchouc est une lame d'essuyage (10) d'un balai d'essuie-glace.

4. Procédé selon l'une des revendications 1 à 3,
**caractérisé en ce que**
la forme de base de l'article en caoutchouc, après durcissement du vernis de glissement, est coupée pour arriver à la mesure de coupe souhaitée.

5. Procédé selon l'une des revendications 1 à 4,
**caractérisé en ce que**
la surface de l'article en caoutchouc, après revêtement avec le vernis de glissement, a été prétraitée, au moins par zones, pour avoir une matière en caoutchouc ayant une surface homogène.

6. Procédé selon l'une des revendications 1 à 5,
**caractérisé en ce que**
le vernis de glissement est séché avant le durcissement.

7. Article en caoutchouc, notamment lame d'essuyage de balai d'essuie-glace ayant un revêtement (15) réalisé au moins par zones et réduisant le frottement, ce revêtement étant formé d'un vernis de glissement,
**caractérisé en ce que**
le vernis de glissement (15) est un vernis durcissable par effet photochimique.

8. Article en caoutchouc selon la revendication 7,
**caractérisé en ce que**
le vernis (15) à durcissement photochimique comprend un agent de glissement, un solvant qui est de préférence de l'eau, et un liant réticulable par rayonnement.

9. Article en caoutchouc selon la revendication 8,
**caractérisé en ce que**
le liant durcissable sous l'effet du rayonnement comprend au moins un acrylate.

10. Article en caoutchouc selon les revendications 8 ou 9,
**caractérisé en ce que**
le moyen de glissement est du polytétrafluoréthylène (PTFE) et/ou du graphite et/ ou MoS₂ et/ ou un polyamide.
